# EUROPEAN PATENT APPLICATION

(11) **EP 4 749 867 A1**
(43) Date of publication of application: **27.05.2026**
(21) Application number: 24214798.1
(22) Date of filing: 22.11.2024
(51) Int. Cl.: H02J 3/32

(54) **POWER CONVERSION SYSTEM AND METHOD FOR CONVERTING POWER**

(71) Applicant: Hitachi Energy Ltd, 8050 Zürich (CH)
(72) Inventor: BAI, Haofeng, 72348 Västerås (SE); NAMI, Alireza, 17066 Stockholm (SE); WANG, Xiongfei, 72350 Västerås (SE)
(74) Representative: Zacco Sweden AB

(57) **Abstract**

Embodiments of present disclosure provide power conversion system (100) and method (200) for converting power. Power conversion system (100) comprising energy storage elements (102), first converter (103) connected to grid (104) to provide bi-directional flow of power between first converter (103) and grid (104). Second converter (107) connected to energy storage elements (102) at one end and other end connected to electric machine (106). Output of second converter (107) is supplied as input to electric machine (106). Controller (108) controls at least one of: current flowing from grid (104) to energy storage elements (102) and corresponding voltage between grid (104) and energy storage elements (102), current flowing from energy storage elements (102) to grid (104) via first converter (103) and corresponding voltage between energy storage elements (102) and grid (104), and current flowing from energy storage elements (102) to control operation of electric machine (106) via second converter (107).

## Description

### TECHNICAL FIELD

The present disclosure relates generally to a field of power conversion system. More particularly, it is related to the power conversion system and method for converting power in the power conversion system.

### BACKGROUND

In recent years, energy transition from fossil fuel energy to renewable energy sources like solar and wind is driving significant changes in power systems. One of significant changes lie in increased penetration of power electronics-interfaced generation, PEIG, i.e., the renewable energy often relies on power electronic converters to interface with the grid and this increases the penetration of the power electronics-interfaced generation in the grid. The penetration here refers to a level of contribution of power electronic based generators make to an overall electricity supply. If more renewable energy sources are added to the grid, the penetration of PEIG also increases. In addition to that, as the renewable energy sources become more prevalent, reliance on thermal power plants is decreasing.

The changes in increased penetration of power electronics-interfaced generation and decreasing of the thermal power plant may lead to several challenges such as reduced total inertia and lower fault currents at the grids that may compromise grid reliability and connectivity. The thermal power plants provide significant rotational inertia to the grid, which helps to stabilize frequency fluctuations. With fewer thermal power plants, the overall inertia of the power conversion systems decreases, which results in a higher frequency fluctuation. Further, the power systems generate lower fault currents during grid faults, which makes fault protection less sensitive as traditional relay protection systems usually rely on fault current amplitude.

In order to overcome some of the challenges mentioned above, various solutions have been proposed. One of the solutions is energy storage system (ESS) with grid-forming-converter in which the ESS is connected to the grid through a grid-forming-converter to provide both voltage and frequency support to the grid. Another solution being explored is turbine, driven by battery energy storage system (BESS) fed motor. The turbine driven by BESS configuration uses a battery energy storage system to drive the turbine. However, neither solution fully resolves all the challenges such as reduced total inertia and lower fault currents. For example, while the ESS with grid-forming-converter offers excellent controllability, it lacks sufficient overcurrent capability due to inherent limitations of power semiconductors.

### SUMMARY

The transition to renewable energy sources leads to significant challenges such as reduced total inertia and lower fault currents that can compromise grid reliability and connectivity. While existing solutions like energy storage system (ESS) connected to grid through grid-forming-converter and battery energy storage system (BESS)-driven turbines offer potential benefits, a comprehensive solution is needed.

Consequently, there is a need for an improved power conversion system. The proposed power converter system is configured to optimize energy storage design for various voltage and current rating.

It is therefore an object of the present disclosure to provide a power conversion system and a method for converting power in the power conversion system, which mitigate, alleviate, or eliminate all or at least some of the above-discussed drawbacks of presently known solutions.

This and other objects are achieved by means of the power conversion system and method for converting power in the power conversion system, as defined in the appended claims. The term exemplary is in the present context to be understood as serving as an instance, example or illustration.

According to a first aspect of the present disclosure, there is provided a power conversion system. The power conversion system comprising one or more energy storage elements, a first converter configured to be connected to a grid to provide a bi-directional flow of power between the first converter and the grid. The power conversion system further comprising an electric machine. The power conversion system further comprising a second converter configured to be connected to the one or more energy storage elements at one end and other end of the second converter is connected to the electric machine. The second converter is configured to convert DC from the one or more energy storage elements to AC. An output of the second converter is supplied as an input to the electric machine. A controller is configured to control at least one of: current flowing from the grid to the one or more energy storage elements via the first converter and corresponding voltage between the grid and the one or more energy storage elements, current flowing from the one or more energy storage elements to the grid via the first converter and corresponding voltage between the one or more energy storage elements and the grid, and current flowing from the one or more energy storage elements to control an operation of the electric machine via the second converter.

In the present embodiment, the first converter and the second converter are arranged in a back-to-back structure, with one side of the second converter is connected to the electric machine (induction motor) for inertia emulation, whereas the other side of the first converter connected to the grid to enhance reactive power control, harmonic filtering, and damping service. Thus, the power conversion system provides a double fed structure, i.e., current flowing from the one or more energy storage elements to control an operation of the electric machine via the second converter and current flowing from the one or more energy storage elements to the grid via the first converter and corresponding voltage between the one or more energy storage elements and the grid, providing optimization in power electronic (PE) converter ratings for grid services. This design allows the power conversion system to handle varying grid conditions, ensuring grid stability while providing necessary grid services such as reactive power and inertia. Advantageously, the present embodiment provides a power conversion system that integrates energy storage elements with electric machines and the grid, ensuring optimized converter ratings, efficient power flow, and enhanced grid services. The power conversion system is ideal for modern energy storage applications, including renewable energy integration, grid stabilization, and electric machine control.

In some embodiments, the one or more energy storage elements and the first converter are comprised in a first subsystem, and the electric machine is comprised in a second subsystem.

In some embodiments, the second sub-system further comprises a synchronous generator connected to the grid, and wherein a rotor of the synchronous generator is connected to the electric machine.

In some embodiments, each of the first sub-system and the second sub-system is connected to the grid.

With proposed embodiment, by combining the benefits of energy storage elements and synchronous generator (motor driven generator), the power conversion system offers a versatile and efficient solution for grid support and renewable energy integration. In some embodiments, the one or more energy storage elements are configured to simultaneously provide power to the grid via the first converter and to the electric machine via the second converter.

In some embodiments, the controller is configured to receive measured values of at least one of: a voltage and current of the grid, a power of the grid, the voltage of the one or more energy storage elements, the power of the one or more energy storage elements, a rotational speed of the electric machine, a position of the rotor of the electric machine, a speed of the synchronous generator, a current output from the synchronous generator, a rotor position of the synchronous generator, a rotating speed of synchronous generator, a current and voltage between the electric machine via the second converter, and a status of the one or more energy storage elements.

In some embodiments, the controller is configured to measure the value of a voltage and current of the grid.

In some embodiments, the controller is configured to measure the value of a power of the grid.

In some embodiments, the controller is configured to measure the value of the voltage of the one or more energy storage elements.

In some embodiments, the controller is configured to measure the value of the power of the one or more energy storage elements.

In some embodiments, the controller is configured to measure the rotational speed of the electric machine.

In some embodiments, the controller is configured to measure the position of the rotor of the electric machine.

In some embodiments, the controller is configured to measure the speed of the synchronous generator.

In some embodiments, the controller is configured to measure the value of current output from the synchronous generator.

In some embodiments, the controller is configured to measure the rotor position of the synchronous generator.

In some embodiments, the controller is configured to measure the rotating speed of synchronous generator.

In some embodiments, the controller is configured to measure the value of the current and voltage between the electric machine via the second converter.

In some embodiments, the controller is configured to measure the status of the one or more energy storage elements.

In some embodiments, the controller is configured to control power supplied to charge the one or more energy storage elements or the power discharged from the one or more energy storage elements based on at least one of: one or more values of the voltage of the grid, the power of the grid, the voltage of the energy storage element, the power of the one or more energy storage element, the rotational speed of the electric machine, the position of the rotor of the electric machine, and the speed of the synchronous generator.

In some embodiments, the controller is configured to control the power supplied to charge the one or more energy storage elements or the power discharged from the one or more energy storage elements based on the one or more values of the voltage of the grid.

In some embodiments, the controller is configured to control the power supplied to charge the one or more energy storage elements or the power discharged from the one or more energy storage elements based on the one or more values of the power of the grid.

In some embodiments, the controller is configured to control the power supplied to charge the one or more energy storage elements or the power discharged from the one or more energy storage elements based on the one or more values of the voltage of the energy storage element.

In some embodiments, the controller is configured to control the power supplied to charge the one or more energy storage elements or the power discharged from the one or more energy storage elements based on the one or more values of the power of the one or more energy storage element.

In some embodiments, the controller is configured to control the power supplied to charge the one or more energy storage elements or the power discharged from the one or more energy storage elements based on the rotational speed of the electric machine.

In some embodiments, the controller is configured to control the power supplied to charge the one or more energy storage elements or the power discharged from the one or more energy storage elements based on the position of the rotor of the electric machine.

In some embodiments, the controller is configured to control the power supplied to charge the one or more energy storage elements or the power discharged from the one or more energy storage elements based on the speed of the synchronous generator.

Advantageously, the controller may be programmed to provide a wide range of grid services, including inertia support, reactive power support, and active filtering, enhancing grid stability and reliability.

With the proposed embodiment, the power conversion system utilizes the double-fed structure to integrate the energy storage elements and synchronous generator (motor driven generators). By using the back-to-back structure arrangement for energy storage integration, the energy storage elements can be optimized for various voltage and current ratings. The controller of the power conversion system provides all grid services such as inertia, reactive power support, active filtering, etc., while overcoming the over current limitation.

In some embodiments, the status of the one or more energy storage elements comprises at least one of: an input/output voltage, an input/output current, temperature, and health status, of the one or more energy storage elements.

In some embodiments, the power conversion system comprises: one or more devices configured to measure at least one of: the voltage and current of the grid, power of the grid, the voltage of the energy storage element, the power of the one or more energy storage elements, the rotational speed of the electric machine, the position of the rotor of the electric machine, the speed of the synchronous generator, the current output from the synchronous generator, the rotor position of the synchronous generator, a rotating speed of synchronous generator, current and voltage between the electric machine via the second converter, and status of the energy storage element.

In some embodiments, the one or more devices are configured to measure the value of a voltage and current of the grid.

In some embodiments, the one or more devices are configured to measure the value of the power of the grid.

In some embodiments, the one or more devices are configured to measure the value of the voltage of the one or more energy storage elements.

In some embodiments, the one or more devices are configured to measure the value of the power of the one or more energy storage elements.

In some embodiments, the one or more devices are configured to measure the rotational speed of the electric machine.

In some embodiments, the one or more devices are configured to measure the position of the rotor of the electric machine.

In some embodiments, the one or more devices are configured to measure the speed of the synchronous generator.

In some embodiments, the one or more devices are configured to measure the value of current output from the synchronous generator.

In some embodiments, the one or more devices are configured to measure the rotor position of the synchronous generator.

In some embodiments, the one or more devices are configured to measure the rotating speed of synchronous generator.

In some embodiments, the one or more devices are configured to measure the value of the current and voltage between the electric machine via the second converter.

In some embodiments, the one or more devices are configured to measure the status of the one or more energy storage elements.

In some embodiments, the power conversion system comprises a transformer between the first sub-system and the grid.

According to a second aspect of the present disclosure, there is provided a method for for converting power in the power conversion system. The method comprises converting, by a first converter, one of: DC from one or more energy storage elements to AC and supplying an output to a grid, or AC from the grid to DC and supplying to the one or more energy storage elements. The method further comprises converting, by a second converter, DC from the one or more energy storage elements to AC and supplying an output to an electric machine; and configuring a controller to control at least one of: power being obtained from the grid to be output to the one or more energy storage elements, power being obtained from the one or more energy storage elements to be output to the grid, and power being obtained from the one or more energy storage elements to control an operation of the electric machine.

In some embodiments, the method comprises configuring the controller to control at least one of: active power/reactive power and/or current being obtained from the grid to be output to the one or more energy storage elements, active power/reactive power and/or current being obtained from the one or more energy storage elements to be output to the grid and active power/reactive power and/or current being obtained from the one or more energy storage elements to control an operation of the electric machine.

In some embodiments, the method comprises configuring the controller to control the active power/reactive power and/or current being obtained from the grid to be output to the one or more energy storage elements.

In some embodiments, the method comprises configuring the controller to control the active power/reactive power and/or current being obtained from the one or more energy storage elements to be output to the grid.

In some embodiments, the method comprises configuring the controller to control the active power/reactive power and/or current being obtained from the one or more energy storage elements to control an operation of the electric machine.

In some embodiments, the method comprises measuring one or more of: a voltage and current of the grid, a power of the grid, the voltage of the one or more energy storage elements, the power of the one or more energy storage elements, a rotational speed of the electric machine, a position of the rotor of the electric machine, a current output from the synchronous generator, a rotor position of the synchronous generator, a rotating speed of synchronous generator, a current and voltage between the electric machine and the second converter, and a status of the one or more energy storage elements. The status comprises at least one of: an input/output voltage, an input/output current, temperature, and health status, of the energy storage elements.

In some embodiments, the method comprises measuring a value of the voltage and current of the grid.

In some embodiments, the method comprises measuring a value of the power of the grid.

In some embodiments, the method comprises measuring a value of the voltage of the one or more energy storage elements.

In some embodiments, the method comprises measuring a value of the power of the one or more energy storage elements.

In some embodiments, the method comprises measuring the rotational speed of the electric machine.

In some embodiments, the method comprises measuring the position of the rotor of the electric machine.

In some embodiments, the method comprises measuring a value of the current output from the synchronous generator.

In some embodiments, the method comprises measuring the rotor position of the synchronous generator.

In some embodiments, the method comprises measuring the rotating speed of synchronous generator.

In some embodiments, the method comprises measuring values of current and voltage between the electric machine and the second converter.

In some embodiments, the method comprises measuring status of the one or more energy storage elements, wherein the status comprises at least one of: an input/output voltage, an input/output current, temperature, and health status, of the energy storage elements.

In some embodiments, the method comprises: controlling power supplied to charge the one or more energy storage elements or the power discharge from the one or more energy storage elements based on at least one of: one or more values of the voltage of the grid, the power of the grid, the voltage of the one or more energy storage elements, the power of the one or more energy storage elements, the rotational speed of the electric machine, the position of the rotor of the electric machine, and the speed of the synchronous generator.

In some embodiments, the method comprises controlling power supplied to charge the one or more energy storage elements or the power discharge from the one or more energy storage elements based on the one or more values of the voltage of the grid.In some embodiments, the method comprises controlling power supplied to charge the one or more energy storage elements or the power discharge from the one or more energy storage elements based on a value of the power of the grid.

In some embodiments, the method comprises controlling power supplied to charge the one or more energy storage elements or the power discharge from the one or more energy storage elements based on a value of the voltage of the one or more energy storage elements.

In some embodiments, the method comprises controlling power supplied to charge the one or more energy storage elements or the power discharge from the one or more energy storage elements based on a value of the power of the one or more energy storage elements.

In some embodiments, the method comprises controlling power supplied to charge the one or more energy storage elements or the power discharge from the one or more energy storage elements based on the rotational speed of the electric machine.

In some embodiments, the method comprises controlling power supplied to charge the one or more energy storage elements or the power discharge from the one or more energy storage elements based on the position of the rotor of the electric machine.

In some embodiments, the method comprises controlling power supplied to charge the one or more energy storage elements or the power discharge from the one or more energy storage elements based on the speed of the synchronous generator.

According to a third aspect, there is provided a computer-readable storage medium storing computer program instructions which, when executed by a processor, cause the processor to perform the method for converting power in a power conversion system.

Other advantages may be readily apparent to one having skill in the art. Certain embodiments may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIGs. 1A-1B disclose different topologies of a power conversion system according to some embodiments;
FIG. 1C discloses an alter topology of the power conversion system with a transformer between a first sub-system and a grid according to some embodiments; and
FIG. 2 shows a flowchart illustrating example steps for a method for converting power in the power conversion system according to some embodiments.

### DETAILED DESCRIPTION

Aspects of the present disclosure will be described more fully hereinafter with reference to the accompanying drawings. The enclosure disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the examples set forth herein.

In the following description of exemplary embodiments, the same reference numerals denote the same or similar components.

The prior art solutions, like grid forming converters and turbine driven BESS systems do not provide good performance in several aspects such as inertia provision, overcurrent capability, reactive power controllability, harmonic compensation, sequence compensation, damping service, etc. To overcome the problems of the prior art solutions, the present embodiments provide a power conversion system and method for converting power in the power conversion system.

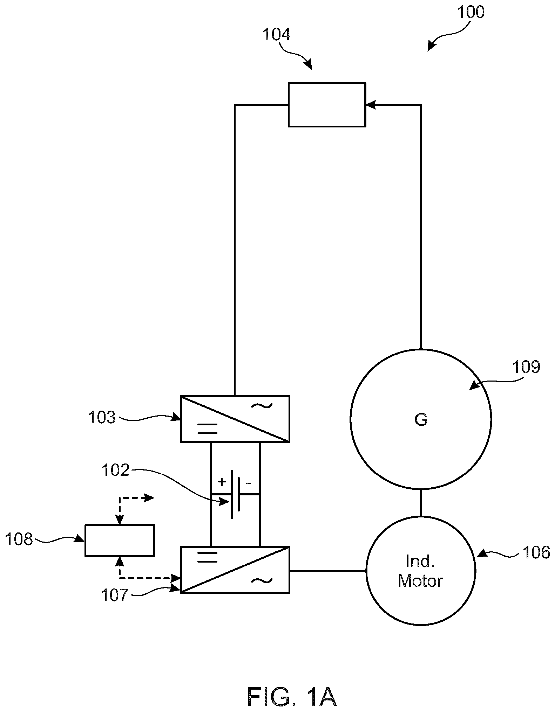

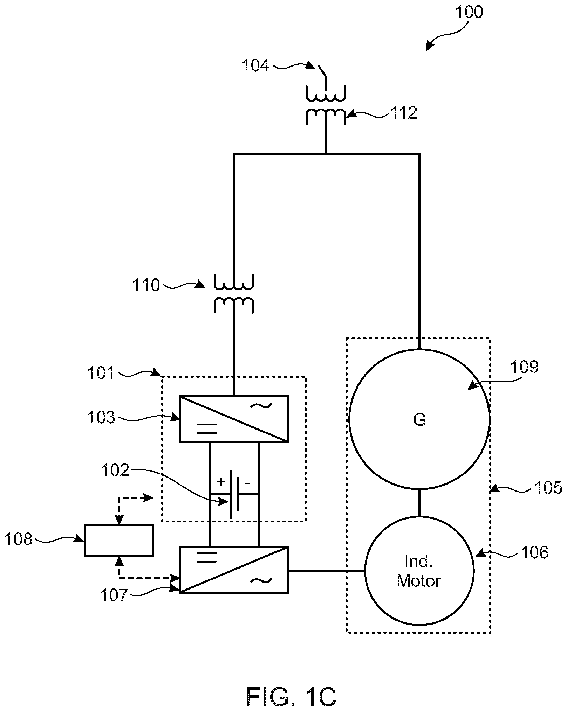

FIGs. 1A-1C disclose different topology illustrations of a power conversion system (100). The power conversion system (100) comprises of one or more energy storage elements (102). The one or more energy storage elements (102) store and release electrical energy and comprise batteries or supercapacitors. As shown in FIG. 1A, a first converter (103) is connected to a grid (104). The first converter (103) may be connected to the grid (104) through a transformer (112, later shown in FIG. 1C). A second converter (107) is configured to be connected to the one or more energy storage elements (102) at one end, and other end of the second converter (107) is connected to an electric machine (106). The first converter (103) is configured to be connected to the grid (104) to provide a bi-directional flow of power between the first converter (103) and the grid (104). The electric machine (106) may comprise a motor that converts mechanical energy to electrical energy or vice versa. In an example, the electric machine (106) may include and not limited to an induction motor.

The second converter (107) of the power system (100) is configured to be connected to the one or more energy storage elements (102) at one end, and the other end of the second converter (107) is connected to the electric machine (106). The second converter (107) is configured to convert Direct Current, DC from the one or more energy storage elements (102) to Alternating Current, AC. An output of the second converter (107) is supplied as an input to the electric machine (106).

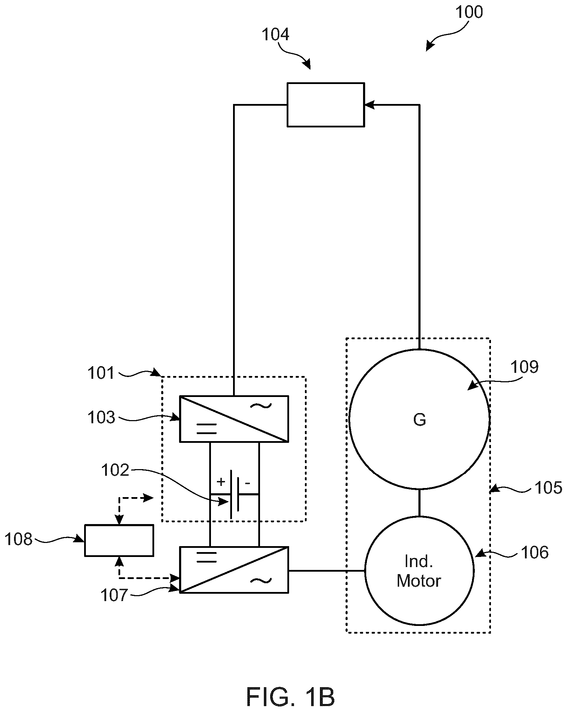

As shown in FIG. 1A and 1B, the first converter (103) and the second converter (107) are arranged in a back-to-back structure, with one side of the second converter (107) connected to the electric machine (106) (induction motor) for inertia emulation, whereas the other side of the first converter (103) is connected to the grid (104) to enhance reactive power control, harmonic filtering, and damping service. Thus, the power conversion system (100) provides a double fed structure, i.e., current flowing from the one or more energy storage elements (102) to control an operation of the electric machine (106) via the second converter (107) and current flowing from the one or more energy storage elements (102) to the grid (104) via the first converter (103) and corresponding voltage between the one or more energy storage elements (102) and the grid (104). The power conversion system (100) may provide optimization in power electronic (PE) converter ratings for grid services. This design allows the power conversion system (100) to handle varying grid conditions, ensuring grid stability while providing necessary grid services such as reactive power and inertia.

Advantageously, the back-to-back structure of the first converter (103) and the second converter (107) may also optimize design of the one or more energy storage elements (102) by adjusting for different voltage and current ratings, ensuring that the one or more energy storage elements (102) are used to their full potential.

The power conversion system (100) further comprises a controller (108). The controller (108) manages operation of the power conversion system (100), controlling power flow between the grid (104) and the energy storage elements (102), as well as operation of the electrical machine (106). In an example, the controller (108) is configured to control at least one of: power flowing from the grid (104) to the one or more energy storage elements (102) via the first converter (103), power flowing from the one or more energy storage elements (102) to the grid (104) via the first converter (103), and power flowing from the one or more energy storage elements (102) to control an operation of the electric machine (106) via the second converter (107).

In an embodiment, as shown in FIGs. 1B and 1C, the one or more energy storage elements (102) and the first converter (103) are comprised in a first subsystem (101) and the electric machine (106) is comprised in a second subsystem (105). Each of the first sub-system (101) and the second sub-system (105) is connected to the grid (104) through a transformer (104).

In an embodiment, the second sub-system (105) further comprises a synchronous generator (109) connected to the grid (104). A rotor (not shown in FIG.s) of the synchronous generator (109) is connected to the electric machine (106).

In an embodiment, as shown in FIG. 1B and 1C, each of the first sub-system (101) and the second sub-system (105) is connected to the grid (104).

In an embodiment, as shown in FIGs. 1A-1C, the one or more energy storage elements (102) are simultaneously providing power to the grid (104) via the first converter (103). Further, the one or more energy storage elements (102) are simultaneously providing power to the electric machine (106) via the second converter (103).

In an embodiment, the controller (108) is configured to receive measured values of at least one of: a voltage and current of the grid (104), a power of the grid (104), the voltage of the one or more energy storage elements (102), the power of the one or more energy storage elements (102), a rotational speed of the electric machine (106), a position of the rotor of the electric machine (106), a speed of the synchronous generator (109), a current output from the synchronous generator (109), a rotor position of the synchronous generator (109), a rotating speed of synchronous generator (109), a current and voltage between the electric machine (106) via the second converter (107), and a status of the one or more energy storage elements (102). In an example, the status of the one or more energy storage elements (102) comprises may include and not limited to an input/output voltage, an input/output current, temperature, and health status, of the one or more energy storage elements (102).

In an embodiment, the controller (108) is configured to control: power supplied to charge the one or more energy storage elements (102) or the power discharged from the one or more energy storage elements (102) based on at least one of: one or more values of the voltage of the grid (104), the power of the grid (104), the voltage of the energy storage element (102), the power of the one or more energy storage element (102), the rotational speed of the electric machine (106), the position of the rotor of the electric machine (106), and the speed of the synchronous generator (109). In an example, the controller (108) can be programmed to provide a wide range of grid services, including inertia support, reactive power support, and active filtering, enhancing grid stability and reliability.

In an embodiment, the status of the one or more energy storage elements (102) comprises at least one of: an input/output voltage, an input/output current, temperature, and health status, of the one or more energy storage elements (102).

In an embodiment, power conversion system (100) comprises one or more devices (not shown in FIG.s). The one or more devices are configured to measure at least one of: the voltage and current of the grid (104), power of the grid (104), the voltage of the energy storage element (102), the power of the one or more energy storage elements (102), the rotational speed of the electric machine (106), the position of the rotor of the electric machine (106), the speed of the synchronous generator (109), the current output from the synchronous generator (109), the rotor position of the synchronous generator (109), a rotating speed of synchronous generator (109), current and voltage between the electric machine (106) via the second converter (107), and status of the energy storage element (102). In an example, the one or more devices may include and not limited to a multi meter, a clamp meter, a voltmeter, a tachometer, a rotor position sensor, an encoder, and so on.

The present embodiment provides a power conversion system that integrates energy storage elements with electric machines and the grid, ensuring optimized converter ratings, efficient power flow, and enhanced grid services. The power conversion system is ideal for modern energy storage applications, including renewable energy integration, grid stabilization, and electric machine control.

In an alternate embodiment, referring to FIG. 1C, the power conversion system may comprise a transformer (210) configured between the first sub-system (101) and the grid (104). As shown in FIG. 1C, the first sub-system (101) and the second converter (107) are arranged in the back-to-back structure, with one side of the second converter (107) is connected to the electric machine (106) (induction motor) for inertia emulation, whereas the other side of the first sub-system (101) connected to the grid (104) to enhance reactive power control, harmonic filtering, and damping service. As shown in FIG. 1C, configuring one additional transformer (110) provides the flexibility of choosing a type of the first converter (103) such as medium voltage (MV) converter or lower voltage (LV) converter. In an example, if the transformer (110) converts MV to LV, a common LV converter can be chosen to be configured. Furthermore, the transformer (110) converter can be saved or removed from the power conversion system (100), if the first converter (103) can be directly connected to a MV grid that integrates the synchronous generator (109), as shown in FIG. 1A and 1B.

The back-to-back structure arrangement enables the energy storage elements (102) to be designed for various voltage and current ratings, enabling the power conversion system (100) to adapt to different grid requirements.

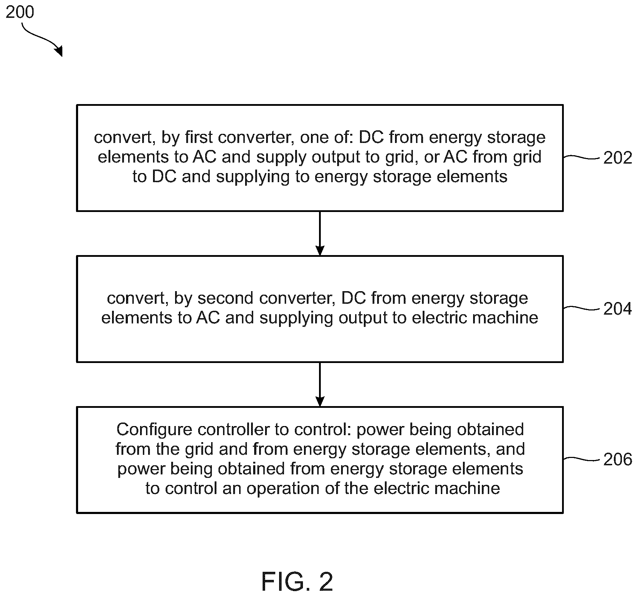

Referring to FIG. 2, a flow diagram showing steps for a method (200) for converting power in the power conversion system (100, as shown in FIG. 1A-1C) is shown. The method (200) at step (202) comprises of converting, by the first converter (103), one of: DC from one or more energy storage elements (102) to AC and supplying an output to the grid (104), or AC from the grid (104) to DC and supplying to the one or more energy storage elements (102).

At step (204) the method (200) comprises converting (204), by the second converter (107), DC from the one or more energy storage elements (102) to AC and supplying the output to the electric machine (106).

At step (206), the method (200) comprises configuring the controller (108) to control at least one of: power being obtained from the grid (104) to be output to the one or more energy storage elements (102), power being obtained from the one or more energy storage elements (102) to be output to the grid (104) and power being obtained from the one or more energy storage elements (102) to control an operation of the electric machine (106).

In an alternate embodiment, the method (200) comprises configuring the controller (108) to control at least one of: active power/reactive power and/or current being obtained from the grid (104) to be output to the one or more energy storage elements (102), active power/reactive power and/or current being obtained from the one or more energy storage elements (102) to be output to the grid (104) and active power/reactive power and/or current being obtained from the one or more energy storage elements (102) to control an operation of the electric machine (106).

In an embodiment, the method (200) further comprises measuring one or more of: the voltage and current of the grid (104), the power of the grid (104), the voltage of the one or more energy storage elements (102), the power of the one or more energy storage elements (102), rotational speed of the electric machine (106), position of the rotor of the electric machine (106), current output from the synchronous generator (109), rotor position of the synchronous generator (109), rotating speed of synchronous generator (109), current and voltage between the electric machine (106), and the second converter (107), and the status of the one or more energy storage elements (102). The status comprises at least one of: the input/output voltage, the input/output current, temperature, and health status, of the energy storage elements (102).

In an embodiment, the method (200) further comprises controlling power supplied to charge the one or more energy storage elements (102) or the power discharge from the one or more energy storage elements (102) based on at least one of: one or more values of the voltage of the grid, the power of the grid, the voltage of the one or more energy storage elements, the power of the one or more energy storage elements, the rotational speed of the electric machine, the position of the rotor of the electric machine, and the speed of the synchronous generator. Details of the method (200) are similar to the details of the power conversion system (100) and hence are not repeated for the sake of brevity.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A power conversion system (100), comprising:
one or more energy storage elements (102);
a first converter (103) configured to be connected to a grid (104) to provide a bi-directional flow of power between the first converter (103) and the grid (104);
an electric machine (106);
a second converter (107) configured to be connected to the one or more energy storage elements (102) at one end, wherein other end of the second converter (107) is connected to the electric machine (106),
wherein the second converter (107) is configured to convert DC from the one or more energy storage elements (102) to AC, wherein an output of the second converter (107) is supplied as an input to the electric machine (106); and
a controller (108) configured to control at least one of:
current flowing from the grid (104) to the one or more energy storage elements (102) via the first converter (103) and corresponding voltage between the grid (104) and the one or more energy storage elements (102);
current flowing from the one or more energy storage elements (102) to the grid (104) via the first converter (103) and corresponding voltage between the one or more energy storage elements (102) and the grid (104); and
current flowing from the one or more energy storage elements (102) to control an operation of the electric machine (106) via the second converter (107).

2. The power conversion system (100) according to claim 1, wherein the one or more energy storage elements (102) and the first converter (103) are comprised in a first subsystem (101), and wherein the electric machine (106) is comprised in a second subsystem (105).

3. The power conversion system (100) according to claim 2, wherein the second sub-system (105) further comprises a synchronous generator (109) connected to the grid (104), and wherein a rotor of the synchronous generator (109) is connected to the electric machine (106).

4. The power conversion system (100) according to any of the claims 2 or 3, wherein each of the first sub-system (101) and the second sub-system (105) is connected to the grid (104).

5. The power conversion system (100) according to any of the preceding claims, wherein the one or more energy storage elements (102) are configured to simultaneously provide power to the grid (104) via the first converter (103) and to the electric machine (106) via the second converter (103).

6. The power conversion system (100) according to any of the preceding claims, wherein the controller (108) is configured to receive measured values of at least one of:
a voltage and current of the grid (104),
a power of the grid (104),
the voltage of the one or more energy storage elements (102),
the power of the one or more energy storage elements (102),
a rotational speed of the electric machine (106),
a position of the rotor of the electric machine (106),
a speed of the synchronous generator (109),
a current output from the synchronous generator (109),
a rotor position of the synchronous generator (109),
a rotating speed of synchronous generator (109),
a current and voltage between the electric machine (106) via the second converter (107), and
a status of the one or more energy storage elements (102).

7. The power conversion system (100) according to any of the preceding claims, wherein the controller (108) is configured to control power supplied to charge the one or more energy storage elements (102) or the power discharged from the one or more energy storage elements (102) based on at least one of:
one or more values of the voltage of the grid (104),
the power of the grid (104),
the voltage of the energy storage element (102),
the power of the one or more energy storage element (102),
the rotational speed of the electric machine (106),
the position of the rotor of the electric machine (106), and
the speed of the synchronous generator (109).

8. The power conversion system (100) according to any of the claims 6 or 7, wherein the status of the one or more energy storage elements (102) comprises at least one of: an input/output voltage, an input/output current, temperature, and health status, of the one or more energy storage elements (102).

9. The power conversion system (100) according to claim 1, further comprising:
one or more devices configured to measure at least one of:
the voltage and current of the grid (104),
power of the grid (104),
the voltage of the energy storage element (102),
the power of the one or more energy storage elements (102),
the rotational speed of the electric machine (106),
the position of the rotor of the electric machine (106),
the speed of the synchronous generator (109),
the current output from the synchronous generator (109),
the rotor position of the synchronous generator (109), a rotating speed of synchronous generator (109),
current and voltage between the electric machine (106) via the second converter (107), and status of the energy storage element (102).

10. The power conversion system (100) according to any of the preceding claims, further comprising a transformer (110) between the first sub-system (101) and the grid (104).

11. A method (200) for converting power in a power conversion system (100), the method (200) comprising:
converting (202), by a first converter (103), one of: DC from one or more energy storage elements (102) to AC and supplying an output to a grid (104), or AC from the grid (104) to DC and supplying to the one or more energy storage elements (102);
converting (204), by a second converter (107), DC from the one or more energy storage elements (102) to AC and supplying an output to an electric machine (106); and
configuring (206) a controller (108) to control at least one of:
power being obtained from the grid to be output to the one or more energy storage elements (102);
power being obtained from the one or more energy storage elements (102)to be output to the grid (104); and
power being obtained from the one or more energy storage elements (102) to control an operation of the electric machine (106).

12. The method (200) according to claim 11, further comprising:
measuring one or more of:
a voltage and current of the grid (104),
a power of the grid (104),
the voltage of the one or more energy storage elements (102),
the power of the one or more energy storage elements (102),
a rotational speed of the electric machine (106),
a position of the rotor of the electric machine (106),
a current output from the synchronous generator (109),
a rotor position of the synchronous generator (109),
a rotating speed of synchronous generator (109),
a current and voltage between the electric machine (106) and the second converter (107), and
a status of the one or more energy storage elements (102), wherein the status comprises at least one of: an input/output voltage, an input/output current, temperature, and health status, of the energy storage elements.

13. The method (200) according to any of the claims 11 or 12, further comprising:
controlling power supplied to charge the one or more energy storage elements (102) or the power discharge from the one or more energy storage elements (102) based on at least one of:
one or more values of the voltage of the grid (104),
the power of the grid (104),
the voltage of the one or more energy storage elements (102),
the power of the one or more energy storage elements (102),
the rotational speed of the electric machine (106),
the position of the rotor of the electric machine (106), and
the speed of the synchronous generator (109).

14. A computer-readable storage medium storing computer program instructions which, when executed by a processor, cause the processor to perform a method as set out in at least one of claims 11 to 13.
